(19) Europäisches Patentamt European Patent Office Office européen des brevets

(11) **EP 4 641 677 A1**

(12) **EUROPEAN PATENT APPLICATION**

(43) Date of publication:
**29.10.2025 Bulletin 2025/44**

(21) Application number: **25169095.4**

(22) Date of filing: **08.04.2025**

(51) International Patent Classification (IPC):
$H01M\ 4/36^{(2006.01)}$    $C01B\ 25/45^{(2006.01)}$
$H01M\ 4/40^{(2006.01)}$    $H01M\ 4/485^{(2010.01)}$
$H01M\ 4/505^{(2010.01)}$    $H01M\ 4/525^{(2010.01)}$
$H01M\ 4/58^{(2010.01)}$    $H01M\ 4/62^{(2006.01)}$
$H01M\ 10/0525^{(2010.01)}$    $H01M\ 4/136^{(2010.01)}$

(52) Cooperative Patent Classification (CPC):
H01M 4/5825; C01B 25/45; H01M 4/136;
H01M 4/364; H01M 4/366; H01M 4/625

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.04.2024 KR 20240054064**

(71) Applicant: **SAMSUNG SDI CO., LTD.**
**Yongin-si, Gyeonggi-do 17084 (KR)**

(72) Inventors:
• **KIM, Young-Ki**
**Yongin-si, Gyeonggi-do 17084 (KR)**
• **CHOI, Aram**
**Yongin-si, Gyeonggi-do 17084 (KR)**
• **KIM, Sangmi**
**Yongin-si, Gyeonggi-do 17084 (KR)**
• **DOO, Sungwook**
**Yongin-si, Gyeonggi-do 17084 (KR)**
• **KANG, Gwiwoon**
**Yongin-si, Gyeonggi-do 17084 (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, PREPARATION METHOD OF THE SAME, AND RECHARGEABLE LITHIUM BATTERY INCLUDING THE SAME**

(57)    A rechargeable lithium battery includes a positive electrode active material, the positive electrode active material including a first particle containing a compound represented by Formula 1 and having a first average particle diameter, and a second particle containing a compound represented by Formula 2 and having a second average particle diameter larger than the first average particle diameter. Each of the first particle and the second particle has a form of a sphere-shaped secondary particle, and an amount of the first particle is greater than an amount of the second particle. A detailed description of Chemical Formulae 1 and 2 is given in this description.

FIG. 6

EP 4 641 677 A1

**Description**

**BACKGROUND**

**1. Field**

Embodiments of the present disclosure described herein are related to a positive electrode active material for a rechargeable lithium battery, a preparation method of the positive electrode active material, and a rechargeable lithium battery including the positive electrode active material, and for example, to a positive electrode active material containing an olivine-based lithium compound, a preparation method of the positive electrode active material containing the olivine-based lithium compound, and a rechargeable lithium battery including the positive electrode active material containing the olivine-based lithium compound.

**2. Description of the Related Art**

Recently, with the rapid spread of battery-powered (battery-using) electronic devices (such as mobile phones and/or laptop computers), and/or electric vehicles, the demand or desire for a rechargeable battery with relatively high energy density and relatively high capacity has significantly increased. Accordingly, research and development have been actively conducted to improve performance of rechargeable batteries, such as rechargeable lithium batteries.

A rechargeable lithium battery includes a positive electrode and a negative electrode both containing active materials capable of intercalation and deintercalation of lithium ions, along with an electrolyte solution. Electrical energy is produced through oxidation and reduction reactions when the lithium ions are intercalated and deintercalated into/from the positive electrode and the negative electrode.

**SUMMARY**

Aspects according to one or more aspects of embodiments are directed toward a positive electrode active material with enhanced (improved) battery characteristics, including enhanced low-temperature capacity, average voltage, energy density, and lifespan, as well as a high binding force for a current collector.

Aspects according to one or more aspects of embodiments are directed toward a rechargeable lithium battery having enhanced (improved) battery characteristics, including enhanced low-temperature capacity, average voltage, energy density, and lifespan, as well as a high binding force for a current collector.

Additional aspects will be set forth in part in the description which follows and, in part, will be apparent from the description, or may be learned by practice of the presented embodiments of the present disclosure.

One or more embodiments of the present disclosure provides a positive electrode active material including a first particle containing a compound represented by Formula 1 and having a first average particle diameter, and a second particle containing a compound represented by Formula 2 and having a second average particle diameter larger than the first average particle diameter. An amount of the first particle may be equal to or greater than an amount of the second particle.

$$\text{Formula 1} \qquad Li_{a1}Mn_{w1}Fe_{x1}Ti_{y1}B1_{z1}PO_{4-b1}$$

In Formula 1 above, $0.8 \leq a1 \leq 1.2$, $0.3 \leq w1 \leq 0.7$, $0.3 \leq x1 \leq 0.7$, $0 \leq y1 \leq 0.05$, $0 \leq z1 \leq 0.05$, $0 \leq b1 \leq 0.05$, and $x1 + y1 + z1 + w1 = 1$ are satisfied.

$$\text{Formula 2} \qquad Li_{a2}Fe_{x2}Ti_{y2}B2_{z2}PO_{4-b2}$$

In Formula 2 above, $0.8 \leq a2 \leq 1.2$, $0.900 \leq x2 \leq 0.999$, $0.001 \leq y2 \leq 0.05$, $0 \leq z2 \leq 0.05$, $0 \leq b2 \leq 0.05$, and $x2 + y2 + z2 = 1$ are satisfied.

Each of B1 in Formula 1 above and B2 in Formula 2 above may be at least one element selected from the group consisting of transition metals having an oxidation number of 4.

In one or more embodiments of disclosure, a preparation method of a positive electrode active material may include preparing a first particle having a first average particle diameter, preparing a second particle having a second average particle diameter larger than the first average particle diameter, and mixing the first particle and the second particle in a mixing ratio of about 50:50 to about 99:1. The preparing of the first particle may include mixing a manganese iron phosphate precursor, a first lithium source, a first carbon source, and a first titanium source to form a first mixture, drying the first mixture through spray drying, and calcining the dried first mixture. The preparing of the second particle may include mixing an iron phosphate precursor, a second lithium source, a second carbon source, and a second titanium source to form a second mixture, drying the second mixture through spray drying, and calcining the dried second mixture.

In one or more embodiments of the present disclosure, a rechargeable lithium battery includes the above-described positive electrode active material.

At least some of the above and other features of the invention are set out in the claims.

## BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:

FIG. 1 is a conceptual diagram illustrating a rechargeable lithium battery according to one or more embodiments of the present disclosure;

FIGS. 2-5 are schematic views each illustrating a rechargeable lithium battery according to one or more embodiments, FIG. 2 shows a cylindrical battery, FIG. 3 shows a prismatic battery, and FIGS. 4 and 5 show pouch-type (kind) batteries;

FIG. 6 is an enlarged view of a positive electrode active material layer of a rechargeable lithium battery according to one or more embodiments of the present disclosure;

FIG. 7 is a flowchart showing a preparation method of a positive electrode active material according to one or more embodiments of the present disclosure;

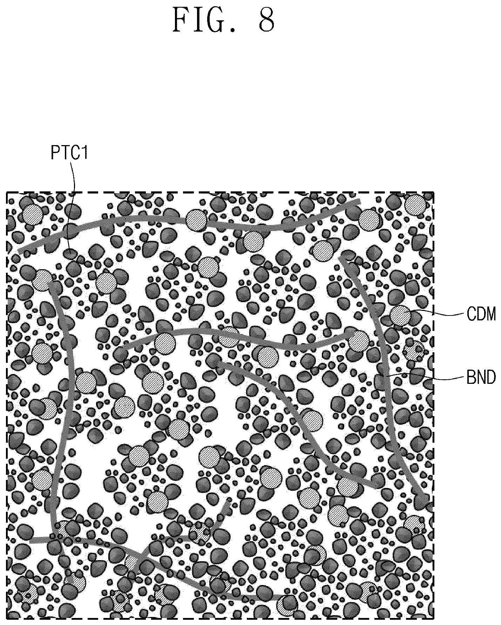

FIG. 8 is an enlarged view of a positive electrode active material layer of a rechargeable lithium battery according to Comparative Example 1 of the present disclosure;

FIG. 9A is a scanning electron microscope (SEM) image of a positive electrode active material according to Example 1 of the present disclosure; and

FIG. 9B is a SEM image of a positive electrode active material according to Example 2 of the present disclosure.

## DETAILED DESCRIPTION

In order to fully understand the configuration and effect of disclosure, embodiments of disclosure will be described in more detail with reference to the accompanying drawings. The present disclosure may, however, be embodied in one or more suitable forms and should not be construed as limited to one or more embodiments set forth herein, and one or more suitable changes and modifications can be made. Rather, these embodiments are provided so that this disclosure will be thorough and complete, and will fully convey the scope of the present disclosure to those skilled in the art to which the present disclosure pertains.

In this specification, it will be understood that, if (e.g., when) an element is referred to as being on another element, the element may be directly on the other element or intervening elements may be present therebetween. In the drawings, thicknesses of components are exaggerated for effectively explaining the technical contents. Like reference numerals or symbols refer to like elements throughout, and duplicative descriptions thereof may not be provided in the specification.

The singular forms are intended to include the plural forms as well, unless the context clearly indicates otherwise. In addition, unless otherwise specially noted, the phrase "A or B" may indicate "A but not B", "B but not A", or "A and B". The terms "comprises/includes" and/or "comprising/including" used in this specification do not exclude the presence or addition of one or more other components.

As used herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

In this specification, "combination thereof" may refer to a mixture, a stack, a composite, a copolymer, an alloy, a blend, and a reaction product of components.

Unless otherwise defined in this specification, a particle diameter may be an average particle diameter. When particles are spherical, "size" or "diameter" indicates a particle diameter or an average particle diameter, and when the particles are non-spherical, the "size" or "diameter" indicates a major axis length or an average major axis length. Also, the particle diameter refers to an average particle diameter ($D_{50}$) which refers to a diameter of particles at a cumulative volume of about 50 vol% in a particle size distribution. The average particle diameter (D50) may be measured by a method suitable to those skilled in the art, for example, may be measured by a particle size analyzer, or may also be measured using a transmission electron microscope (TEM) image or a scanning electron microscope (SEM) image. In one or more embodiments, the average particle diameter is measured by a measuring device using dynamic light-scattering, wherein the number of particles is counted for each particle size range by performing data analysis, and an average particle diameter ($D_{50}$) value may then be obtained by calculation therefrom. Also, the average particle diameter may be measured using a laser diffraction method. When measured by the laser diffraction method, specifically, after dispersing particles to be measured in a dispersion medium, the dispersion medium is introduced into a commercial laser diffraction particle size measurement instrument (e.g., Microtrac MT 3000) and irradiated with ultrasonic waves of about 28 kHz at an output of about 60 W, and the average particle diameter ($D_{50}$) based on about 50% of particle size distribution in the measurement instrument may then be calculated.

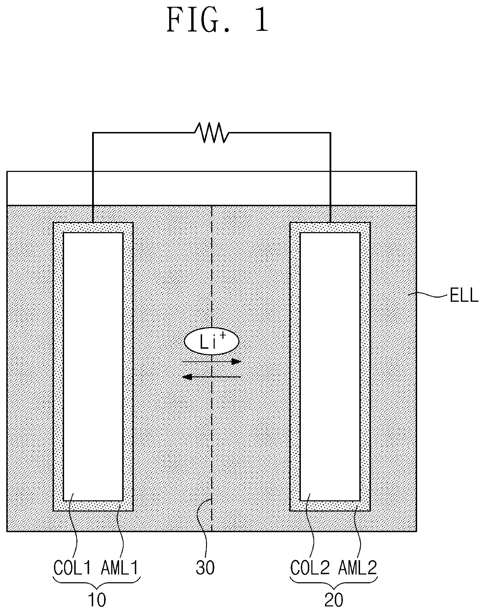

FIG. 1 is a conceptual diagram showing a rechargeable lithium battery according to one or more embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other with the separator 30 therebetween. The separator 30 may be arranged between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

**Positive Electrode 10**

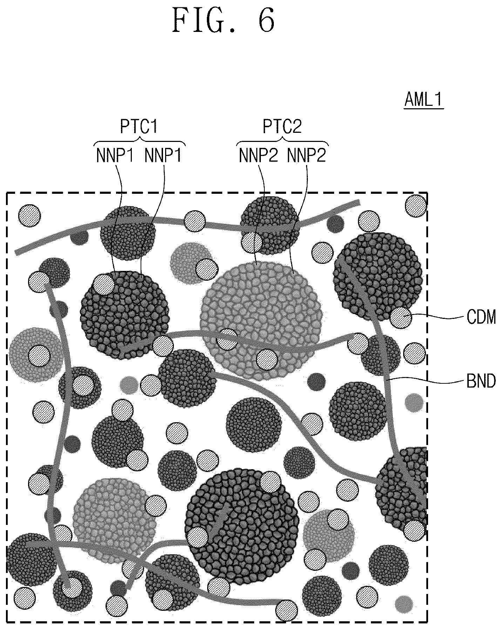

The positive electrode 10 for a rechargeable lithium battery may include a current collector COL1 and a positive electrode active material layer AML1 formed on the current collector COL1. The positive electrode active material layer AML1 may include a positive electrode active material and may further include a binder and/or a conductive material. The positive electrode active material layer AML1 according to one or more embodiments of the present disclosure will be described in more detail with reference to FIG. 6. Al may be used for the current collector COL1, but the present disclosure is not limited thereto.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material or electron conductor).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and/or a (e.g., any suitable) combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, and/or the like in a form of a metal powder or a metal fiber; a conductive polymer such as a polyphenylene derivative; and/or a (e.g., any suitable) mixture thereof.

The negative current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

**Negative Electrode Active Material**

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon and/or a (e.g., any suitable) combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_y$ ($0 < y \leq 2$), e.g., $SnO_2$, a Sn-based alloy, and/or a (e.g., any suitable) combination thereof.

The silicon-carbon composite may be a composite of silicon and amorphous carbon. According to one or more embodiments, the silicon-carbon composite may include (e.g., may be in a form of) silicon particles and amorphous carbon coated on the surface of the silicon particles. For example, the silicon-carbon composite may include a secondary particle (core) in which primary silicon particles are agglomerated (assembled), and an amorphous carbon coating layer (shell) on the surface of the secondary particle. The amorphous carbon may also be between the primary silicon particles, and for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

**Separator 30**

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one or both surfaces (e.g., opposite surfaces)) of the porous substrate.

The porous substrate may be a polymer film formed of any one selected from among polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In addition, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

**Rechargeable Lithium Battery**

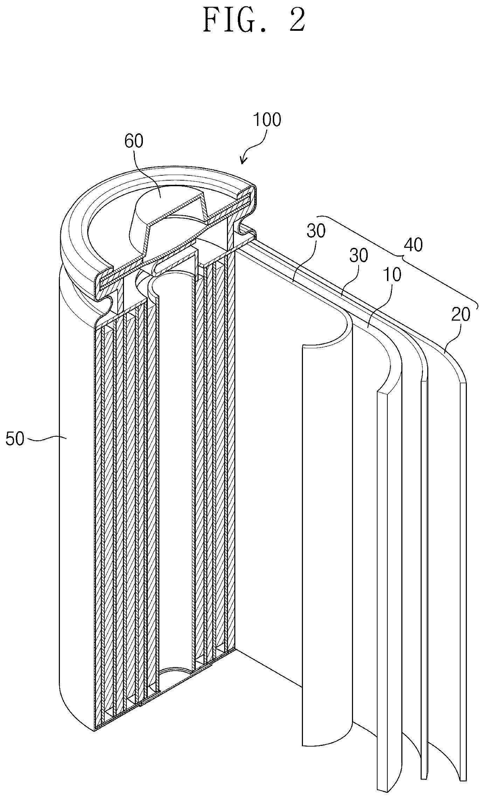

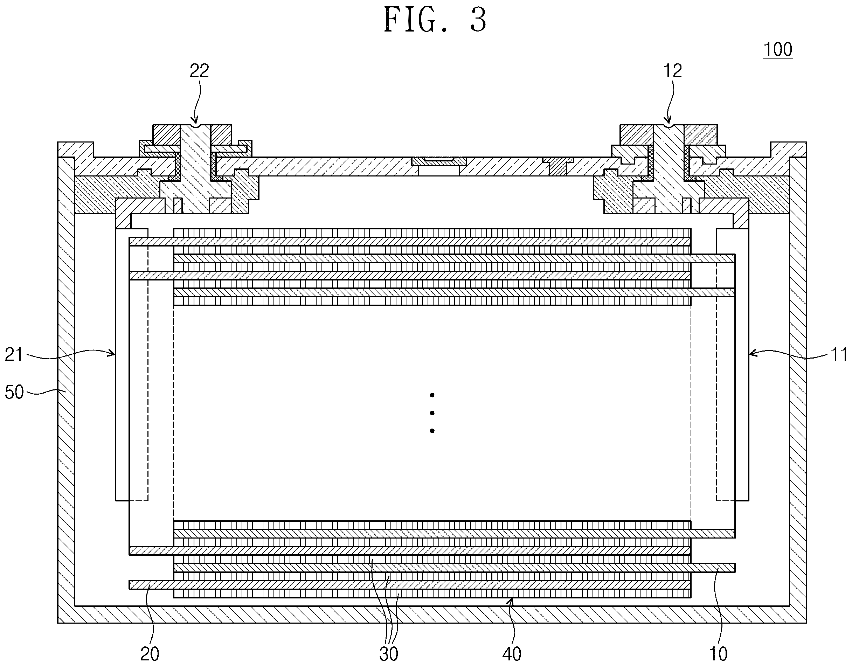

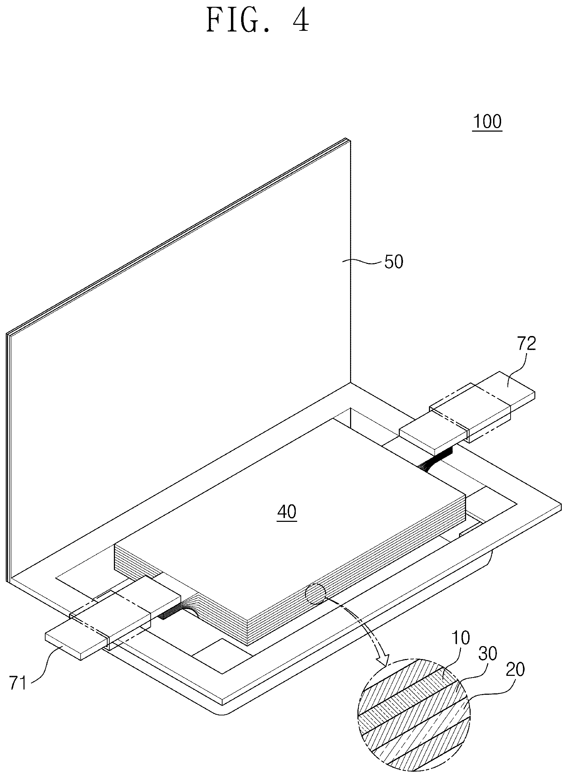

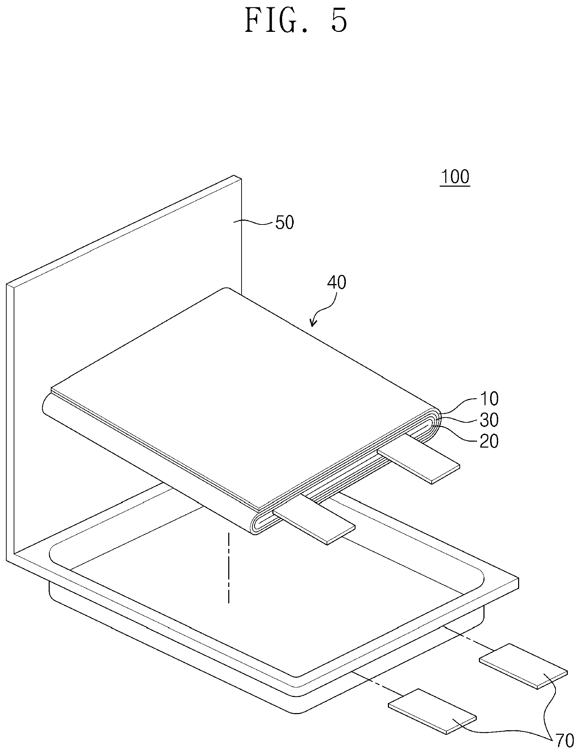

The rechargeable lithium battery may be classified into cylindrical, prismatic, pouch, or coin-type (kind) batteries, and/or the like depending on their shape. FIGS. 2 to 5 are schematic views each illustrating a rechargeable lithium battery according to one or more embodiments. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIG. 6 is an enlarged view of a positive electrode active material layer of a rechargeable lithium battery according to one or more embodiments of the present disclosure. Referring to FIG. 6, as previously described, the positive electrode active material layer AML1 (see FIG. 1) may include a first particle PTC1, a second particle PTC2, a conductive material (e.g., electron conductor) CDM, and a binder BND. The first particle PCT1 may be a sphere-shaped or oval-shaped secondary particle in which at least two first primary particles NNP1 are aggregated (e.g., agglomerated). The second particle PTC2 may be a sphere-shaped or oval-shaped secondary particle in which at least two second primary particles NNP2 are aggregated (e.g., agglomerated). A plurality of first particles PTC1 and a plurality of second particles PTC2 constitutes a positive electrode active material according to one or more embodiments of the present disclosure.

The positive electrode active material layer AML1 may further include an additive that may serve as a sacrificial positive electrode.

An amount of the first particle PTC1 and second particle PTC2 in the positive electrode active material layer AML1 may be about 90 wt% to about 99.5 wt% with respect to a total of 100 wt% of the positive electrode active material layer AML1. An amount of each of the binder BND and the conductive material CDM may be about 0.5 wt% to about 5 wt% with respect to a total of 100 wt% of the positive electrode active material layer AML1.

The binder BND may bind the first particle PTC1, the second particle PTC2, and the conductive material CDM to each other. For example, the binder BND may include at least one selected from among the group consisting of polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, and nylon, but one or more embodiments of the present disclosure is not limited thereto.

The conductive material CDM may be used to improve conductivity of the positive electrode active material layer AML1. Any conductive material that does not cause chemical changes of the positive electrode active material layer AML1 may be used, without limitation, as the conductive material CDM. Examples of the conductive material CDM may include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, and/or the like, in a form of a metal powder or a metal fiber; a conductive polymer such as a polyphenylene derivative; and/or a (e.g., any suitable) mixture thereof.

Hereinafter, each of the first particle PTC1 and the second particle PTC2 will be described in more detail.

**First Particle PTC1**

The first particle PTC1 has a polycrystal form, and is a secondary particle in which at least two first primary particles NNP1 are aggregated (e.g., agglomerated). For example, one first particle PTC1 may include a plurality of first primary particles NNP1 that are aggregated (e.g., agglomerated) with each other. The first particle PTC1 may have a sphere or oval shape. For example, the first particle PTC1 may have a form of a sphere-shaped secondary particle.

In one or more embodiments, the first particle PTC1 may include a coating layer on a surface thereof. The coating layer may cover the entire surface of the first particle PTC1, or may cover a portion of the surface of the first particle PTC1. For example, the coating layer may include carbon and/or a carbon-containing compound. The first particle PTC1 may have improved structural stability and electrical conductivity due to the coating layer. That is, the coating layer may improve the structural stability and electrical conductivity of the first particle PTC1.

The coating layer may further include at least one selected from among the group consisting of a titanium-containing compound and a compound containing transition metal having an oxidation number of 4. A metal-containing compound such as the titanium-containing compound and the compound containing transition metal having an oxidation number of 4 may be, for example, a metal oxide, a metal hydroxide, a metal carbonate, or a composite or mixture thereof. The metal-containing compound may further include another metal or non-metal element. For example, the metal-containing compound may further include lithium.

In one or more embodiments, the first particle PTC1 may further include a grain boundary coating layer on surfaces of the first primary particles NNP1. The grain boundary coating layer may be present inside the first particle PTC1. The grain boundary coating layer may be formed along an interface between the first primary particles NNP1 inside the first particle PTC1. For example, the grain boundary coating layer may refer to a material applied to the grain boundary inside the first particle PTC1. The grain boundary coating layer may include carbon and/or a carbon-containing compound. The grain boundary coating layer may further include at least one selected from the group consisting of a titanium-containing compound and a compound containing transition metal having an oxidation number of 4.

The inside of the first particle PTC1 may refer to an entire inner region of the first particle PTC1 excluding (e.g., not including) the surface of the first particle PTC1. For example, the inside of the first particle PTC1 may refer to an entire inner region from about 10 nm depth from the outer surface of the first particle PTC1, or a region from about 10 nm depth to about 2 $\mu$m depth. For example, in one or more embodiments, the inside of the first particle PTC1 may refer to the entire inner region starting from about 10 nm below the outer surface of the first particle PTC1, or a region extending from about 10 nm to about 2 $\mu$m in depth.

Because the first particle PTC1 may further include a grain boundary coating part, structural stability may be strengthened, and a coating layer may be formed uniformly (e.g., substantially uniformly) on the surface of the first particle PTC1. In one or more embodiments, because the first particle PTC1 may further include the grain boundary coating part, the electrical conductivity of the first particle PTC1 may be further improved.

The first particle PTC1 may have an average particle diameter of about 1 $\mu$m to about 15 $\mu$m, about 1 $\mu$m to about 10 $\mu$m, about 1 $\mu$m to about 7 $\mu$m, or about 3 $\mu$m to about 7 $\mu$m. The average particle diameter of the first particle PTC1 may be substantially equal to or smaller than the average particle diameter of the second particle PTC2 to be described in more detail later. In one or more embodiments, to obtain the average particle diameter of the first particle PTC1, diameters of particles may be measured with a particle size analyzer, and in the particle size distribution, a diameter ($D_{50}$) of the particles at a cumulative volume of about 50 vol% may be referred to as the average particle diameter.

The first primary particle NNP1 of the first particle PTC1 may have a size of about 10 nm to about 400 nm, about 20 nm to about 300 nm, or about 50 nm to about 200 nm. The size of the first primary particle NNP1 of the first particle PTC1 may be smaller than the size of the second primary particle NNP2 of the second particle PTC2 to be described in more detail later. In one or more embodiments, the size of the first primary particle NNP1 may refer to a value obtained by measuring diameters of about 30 first primary particles NNP1 randomly selected from among an electron micrograph of a positive electrode active material. The sizes of the first primary particles NNP1 may be substantially uniform.

The first particle PTC1 may include an olivine-based lithium compound represented by Formula 1.

$$\text{Formula 1} \qquad Li_{a1}Mn_{w1}Fe_{x1}Ti_{y1}B1_{z1}PO_{4-b1}$$

In Formula 1 above, $0.8 \leq a1 \leq 1.2$, $0.3 \leq w1 \leq 0.7$, $0.3 \leq x1 \leq 0.7$, $0 \leq y1 \leq 0.05$ (e.g. $0.001 \leq y1 \leq 0.05$), $0 \leq z1 \leq 0.05$, $0 \leq b1 \leq 0.05$, and $x1 + y1 + z1 + w1 = 1$ are satisfied. B1 in Formula 1 above is at least one element selected from the group consisting of transition metals having an oxidation number of 4.

Ti contained in the first particle PTC1 may have the effect of controlling growth of the first primary particles NNP1 of the first particle PTC1, and as a result, the sizes of the first primary particles NNP1 of the first particle PTC1 may be made more substantially uniform and smaller. In one or more embodiments, a doping amount of Ti in the first particle PTC1 may be about 1000 ppm to about 3000 ppm, or about 1500 ppm to about 3000 ppm. In one or more embodiments, the doping amount of Ti in the first particle PTC1 may be defined as the weight of Ti with respect to the total weight of metals other than lithium in the olivine-based lithium active material represented by Formula 1 above. That is, the doping amount of Ti may be the weight of the doping element with respect to the total weight of metals excluding lithium (e.g., not including lithium) in the olivine-based lithium compound represented by Formula 1. For example, in case of $LiMn_{0.6}Fe_{0.396}Ti_{0.004}PO_4$, the doping amount of Ti may be about 2000 ppm. When the amount of Ti falls within the above-mentioned doping range, the first primary particles NNP1 of the first particle PTC1 may be made to a desired or suitable size according to one or more embodiments of the present disclosure.

The first particle PTC1 may further include carbon from (e.g., derived from) the above-described coating layer and/or grain boundary coating layer. An amount of carbon element in the first particle PTC1 may be about 0.5 wt% to about 10 wt%, about 1 wt% to about 3 wt%, or about 1.5 wt% to about 2.0 wt% based on a total of 100 wt% of the first particle PTC1. The amount of carbon element in the first particle PTC1 may be greater than an amount of carbon element in the second particle PTC2. In other words, the first particle PTC1 may contain carbon derived from the coating layer and/or grain boundary coating layer. The carbon content in the first particle PTC1 ranges from about 0.5 wt% to 10 wt%, typically between 1 wt% and 3 wt%, or more specifically between 1.5 wt% and 2.0 wt%, based on the total weight of the first particle PTC1. This carbon content may be higher than that in the second particle PTC2.

The first particle PTC1 may have a sphere shape in which the nano-sized first primary particles NNP1 are aggregated (e.g., agglomerated). With the first primary particles NNP1 being closely aggregated (e.g., agglomerated) with each other, the first particle PTC1 may have the following characteristics. The first particle PTC1 may have a sphere or oval shape. The average particle diameter ($D_{50}$) of the first particle PTC1 may be about 1 $\mu$m to about 7 $\mu$m. The first particle PTC1 may have a porosity of about 15% to about 40%, or about 30% to about 40%. Here, porosity (n) may be defined as the pore volume (Vp) divided by the total volume (Vt) of particles, or

$$n = \frac{V_p}{V_t}.$$

For example, porosity can be measured using Mercury Intrusion Porosimetry (MIP), Gas Adsorption (BET Method), or Helium Pycnometry.

The span value, $\dfrac{D_{90} - D_{10}}{D_{50}}$ obtained by analysis on the first particle PTC1 with a particle size analyzer, may be about 0.3 to about 0.75. The porosity of the first particle PTC1 may be larger than the porosity of the second particle PTC2.

When the first particle PTC1 is a sphere-shaped secondary particle in which the nano-sized first primary particles NNP1 are aggregated (e.g., agglomerated), an amount of a binder BND necessary for binding the first particle PTC1 to the current collector COL1 (see FIG. 1) may be smaller than an amount of the binder BND if (e.g., when) the first particle PTC1 is a single particle. This may be because binding force between the first particle PTC1 and the current collector COL1 becomes higher, due to the larger average particle diameter of the first particle PTC1, if (e.g., when) the first particle PTC1 is a secondary particle, compared with if (e.g., when) it is a single particle.

The single particle, previously described, may refer to one particle that exists alone without a grain boundary therein. In terms of morphology, the single particle may refer to one particle, a monolith structure, a single unitary structure, or a non-aggregated (e.g., non-agglomerated) particle, existing as an independent phase in which particles do not aggregate with each other. For example, the single particle may be a single crystal. In one or more embodiments, the single particle may be a particle containing a few crystals. The single particle may be independently separated. In one or more embodiments, the single particle may be in a form of having about 2 to about 100 single particles attached (bound) to each other. The single particle may have an amorphous form in which a plurality of single particles are attached in a disorderly manner. The diameter of the single particle may vary. For example, if (e.g., when) the first particle PTC1 is a single particle, the average particle diameter may be about 0.2 $\mu$m to about 2.5 $\mu$m. In other words, a single particle refers to an individual particle that exists independently without any grain boundaries, often as a monolithic or unitary structure. It can be a single crystal or contain a few crystals, and may vary in form, including being independently separated or loosely bound with about 2 to 100 other single particles. On the other hand, a secondary particle is a sphere-shaped aggregate of nano-sized primary particles, which requires less binder to attach to a current collector due to its larger average particle diameter, resulting in a higher binding force compared to a single particle. The diameter of a single particle can range from about 0.2 $\mu$m to 2.5 $\mu$m.

**Second Particle PTC2**

The second particle PTC2 has a polycrystal form, and includes a secondary particle in which at least two second primary particles NNP2 are aggregated (e.g., agglomerated). For example, one second particle PTC2 may include a plurality of second primary particles NNP2 that are aggregated (e.g., agglomerated) with each other. The second particle PTC2 may have a sphere or oval shape. For example, the second particle PTC2 may have a form of a sphere-shaped secondary particle.

In one or more embodiments, the second particle PTC2 may include a coating layer on a surface thereof. The coating layer may cover the entire surface of the second particle PTC2, or may cover a portion of the surface of the second particle PTC2. For example, the coating layer may include carbon and/or a carbon-containing compound.

The coating layer may further include at least one selected from among the group consisting of a titanium-containing compound and a compound containing transition metal having an oxidation number of 4. A metal-containing compound such as the titanium-containing compound and the compound containing transition metal having an oxidation number of 4 may be, for example, a metal oxide, a metal hydroxide, a metal carbonate, or a composite or mixture thereof. The metal-containing compound may further include another metal or non-metal element. For example, the metal-containing compound may further include lithium. The second particle PTC2 may have improved structural stability and electrical conductivity due to the coating layer. That is, the coating layer may improve the structural stability and electrical conductivity of the second particle PTC2.

In one or more embodiments, the second particle PTC2 may further include a grain boundary coating layer on surfaces of the second primary particles NNP2. The grain boundary coating layer may be present inside the second particle PTC2. The grain boundary coating layer may be formed along an interface between the second primary particles NNP2 inside the second particle PTC2. For example, the grain boundary coating layer may refer to a material applied to the grain boundary inside the second particle PTC2. The grain boundary coating layer may include carbon and/or a carbon-containing compound. The grain boundary coating layer may further include at least one selected from among the group consisting of a titanium-containing compound and a compound containing transition metal having an oxidation number of 4.

The inside of the second particle PTC2 may refer to an entire inner region of the second particle PTC2 excluding the surface of the second particle PTC2. For example, the inside of the second particle PTC2 may refer to an entire inner region from about 10 nm depth from the outer surface of the second particle PTC2, or a region from about 10 nm depth to about 2 $\mu$m depth.

Because the second particle PTC2 may further include a grain boundary coating part, structural stability may be strengthened, and a coating layer may be formed uniformly (e.g., substantially uniformly) on the surface of the second particle PTC2. In addition, because the second particle PTC2 may further include the grain boundary coating part, the electrical conductivity of the second particle PTC2 may be further improved.

The second particle PTC2 may have an average particle diameter of about 2 $\mu$m to about 15 $\mu$m, about 3 $\mu$m to about 12 $\mu$m, or about 3 $\mu$m to about 10 $\mu$m. For example, the second average particle diameter of the second particle PTC2 may be about 5 $\mu$m. The average particle diameter of the second particle PTC2 may be substantially equal to or larger than the average particle diameter of the first particle PTC1. In one or more embodiments, to obtain the average particle diameter of the second particle PTC2, diameters of particles may be measured with a particle size analyzer, and in the particle size distribution, a diameter ($D_{50}$) of the particles at a cumulative volume of about 50 vol% may be referred to as the average particle diameter.

The second primary particle NNP2 of the second particle PTC2 may have a size of about 50 nm to about 300 nm, about 100 nm to about 300 nm, or about 200 nm to about 300 nm. The size of the second primary particle NNP2 of the second particle PTC2 may be larger than the size of the first primary particle NNP1 of the first particle PTC1. In one or more embodiments, the size of the second primary particle NNP2 may refer to a value obtained by measuring diameters of about 30 second primary particles NNP2 randomly selected from among an electron micrograph of a positive electrode active material. The sizes of the second primary particles NNP2 may be substantially uniform.

The second particle PTC2 may include an olivine-based lithium compound represented by Formula 2.

$$\text{Formula 2} \qquad Li_{a2}Fe_{x2}Tiy_2B2_{z2}PO_{4-b2}$$

In Formula 2 above, $0.8 \leq a2 \leq 1.2$, $0.900 \leq x2 \leq 0.999$, $0.001 \leq y2 \leq 0.05$, $0 \leq z2 \leq 0.05$, $0 \leq b2 \leq 0.05$, and $x2 + y2 + z2 = 1$, and in Formula 2 above, B2 is at least one element selected from the group consisting of transition metals having an oxidation number of 4.

Ti contained in the second particle PTC2 may have the effect of controlling growth of the second primary particles NNP2 of the second particle PTC2, and as a result, the sizes of the second primary particles NNP2 of the second particle PTC2 may be made more uniform (e.g., more substantially uniform) and smaller. In one or more embodiments, a doping amount of Ti in the second particle PTC2 may be about 1000 ppm to about 3000 ppm, or about 500 ppm to about 1500 ppm. When the amount of Ti falls within the above-mentioned doping ranges, the second primary particles NNP2 of the second particle PTC2 may be made to a desired or suitable size according to one or more embodiments of the present disclosure.

According to one or more embodiments of the present disclosure, the doping amount (or content (e.g., amount)) of Ti in the first particle PTC1 may be greater than the doping amount (or content (e.g., amount)) of Ti in the second particle PTC2. Therefore, the size of the first primary particle NNP1 of the first particle PTC1 may be smaller than the size of the second primary particle NNP2 of the second particle PTC2.

The second particle PTC2 may further include carbon from (e.g., derived from) the coating layer previously described. An amount of carbon element in the second particle PTC2 may be about 0.5 wt% to about 10 wt%, about 1 wt% to about 3 wt%, or about 1 wt% to about 1.9 wt% based on a total of 100 wt% of the second particle PTC2.

The second particle PTC2 may have a sphere shape in which the nano-sized second primary particles NNP2 are aggregated (e.g., agglomerated). With the second primary particles NNP2 being closely aggregated (e.g., agglomerated) with each other, the second particle PTC2 may have the following characteristics. The second particle PTC2 may have a sphere or oval shape. The average particle diameter ($D_{50}$) of the second particle PTC2 may be about 3 $\mu$m to about 10 $\mu$m. The second particle PTC2 may have a porosity of about 15% to about 30%, or about 20% to about 30%. The span value, obtained by analysis on the second particle PTC2 with a particle size analyzer, may be about 0.3 to about 0.75.

According to one or more embodiments of the present disclosure, the size of the first primary particle NNP1 of the first particle PTC1 may be smaller than the size of the second primary particle NNP2 of the second particle PTC2. Nevertheless, the porosity of the first particle PTC1 may be larger than the porosity of the second particle PTC2. This may result from relatively decreased adhesion between the first primary particles NNP1 due to the small size of the first primary particle NNP1 of the first particle PTC1.

When the second particle PTC2 is a sphere-shaped secondary particle in which the nano-sized second primary particles NNP2 are aggregated (e.g., agglomerated), an amount of a binder BND necessary for binding the second particle PTC2 to the current collector COL1 (see FIG. 1) may be smaller than an amount of the binder BND if (e.g., when) the second particle PTC2 is a single particle. This may be because binding force between the second particle PTC2 and the current collector COL1 becomes higher, due to the larger average particle diameter of the second particle PTC2, if (e.g., when) the second particle PTC2 is a secondary particle, than if (e.g., when) it is a single particle.

In one or more embodiments, if (e.g., when) the second particle PTC2 is a sphere-shaped secondary particle in which the nano-sized second primary particles NNP2 are aggregated (e.g., agglomerated), the amount of the binder BND necessary for binding the second particle PTC2 to the current collector COL1 (see FIG. 1) may be smaller than the amount of the binder BND necessary if (e.g., when) the first particle PTC1 is a sphere-shaped secondary particle in which the nano-sized first primary particles NNP1 are aggregated (e.g., agglomerated). This may result from the average particle diameter of the second particle PTC2 being larger than the average particle diameter of the first particle PTC1. In other words, if the second particle PTC2 is a sphere-shaped secondary particle composed of aggregated nano-sized primary particles, it requires less binder to attach to the current collector compared to the first particle PTC1, which is also a sphere-shaped secondary particle. This is because the second particle PTC2 has a larger average particle diameter than the first particle PTC1.

In one or more embodiments, the positive electrode active material according to one or more embodiments of the present disclosure may include the first particle PTC1, which is a secondary particle (e.g., in a secondary particle form), and the second particle PTC2, which is a secondary particle (e.g., also in a secondary particle form), by mixing them in a particular ratio. Therefore, the positive electrode active material may have high low-temperature capacity, high average voltage, high energy density, and long lifespan that are the advantages attributable to the first particle PTC1, and at the same time, may have high binding force for the current collector COL1 (see FIG. 1) that is the advantage attributable to the second particle PTC2. For example, compared with a positive electrode active material having only the first particle PTC1, the positive electrode active material may have improved battery characteristics to substantially the same or similar extent, and at the same time, may have the advantage that a preparation process of a positive electrode is relatively easy.

Referring back to FIG. 6, the positive electrode active material according to one or more embodiments of the present disclosure will be described in more detail. The positive electrode active material according to one or more embodiments of the present disclosure includes the first particle PTC1 and the second particle PTC2. The mixing ratio of the first particle PTC1 and the second particle PTC2 in the positive electrode active material may be about 50:50 to about 99:1 (e.g. 51:49 to about 99:1, or about 55:45 to about 65:35).

In one or more embodiments, the mixing ratio of the first particle PTC1 and the second particle PTC2 may be adjusted such that an amount of Mn with respect to metal elements other than lithium in the positive electrode active material becomes about 25 at% to about 70 at%. For example, if (e.g., when) the first particle PTC1 contains $LiMn_{0.6}Fe_{0.4}PO_4$ and the second particle PTC2 contains $LiFePO_4$, the mixing ratio of the first particle PTC1 and the second particle PTC2 may be adjusted to about 70:30. In one or more embodiments, the amount of Mn with respect to the metal elements other than lithium in the mixture may be about 42 at%.

Because the first particle PTC1 contains Mn, compared with the second particle PTC2, the first particle PTC1 may improve an operating voltage and energy density of a rechargeable battery. By mixing the first particle PTC1 and the second particle PTC2 in an appropriate or suitable ratio to adjust the amount of Mn to become about 25 at% to about 70 at%, the rechargeable battery including the positive electrode active material according to this embodiment may have an improved operating voltage, compared with a general lithium iron phosphate (LFP) battery. In one or more embodiments, the average voltage of the rechargeable lithium battery, according to one or more embodiments of the present disclosure, may be about 3.0 V to about 4.5 V. In one or more embodiments, because the average voltage is proportionate to the energy density, the increase in average voltage, previously described, may also contribute to an increase in energy density.

In the positive electrode active material according to one or more embodiments of the present disclosure, the first particle PTC1 that is a secondary particle and the second particle PTC2 that is a secondary particle may be mixed therein, thereby improving pellet density, capacity, and lifespan. That is, a mixture of the first particle PTC1 that is a secondary particle and the second particle PTC2 that is a secondary particle may improve pellet density, capacity, and lifespan. In one or more embodiments, the pellet density of the positive electrode active material, according to one or more embodiments of disclosure, may be about 2.0 g/cc to about 2.5 g/cc.

In the positive electrode active material according to one or more embodiments of disclosure, the first particle PTC1 that is a secondary particle and the second particle PTC2 that is a secondary particle may be mixed therein, thereby improving low-temperature characteristics. That is, a mixture of the first particle PTC1 that is a secondary particle and the second particle PTC2 that is a secondary particle may improve low-temperature characteristics. In one or more embodiments, a capacity of the rechargeable lithium battery at about -20 °C compared with an initial discharge amount thereof at about 25 °C (capacity at about -20 °C/initial discharge amount at about 25 °C) may be about 75% or greater. For example, the capacity at about -20 °C compared with the initial discharge amount at about 25 °C (capacity at about -20 °C/initial discharge amount at about 25 °C) of the rechargeable lithium battery, according to one or more embodiments of the present disclosure, may be about 75% to about 90%, about 76% to about 90%, or about 75% to about 90%.

## Preparation Method of Positive Electrode Active Material

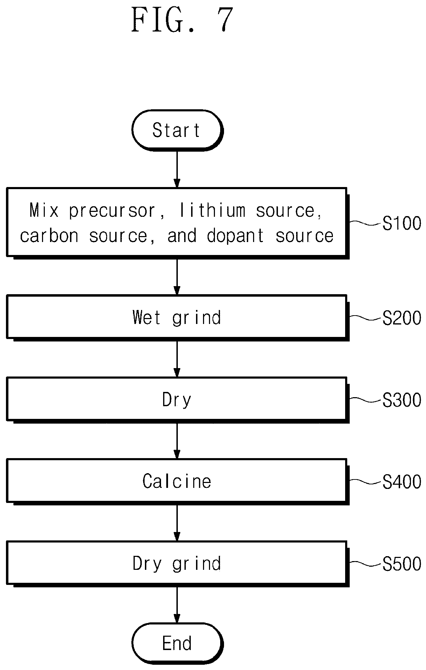

FIG. 7 is a flowchart showing a preparation method of a positive electrode active material according to one or more embodiments of the present disclosure. Referring to FIG. 7, preparation of a first particle PTC1 according to one or more embodiments of the present disclosure will be described in more detail.

A manganese iron phosphate precursor, a lithium source, a carbon source, and a titanium source may be added to a solvent and mixed (S100). For example, the solvent may be water, ethanol, and/or the like. The manganese iron phosphate precursor may be a compound containing all of manganese (Mn), iron (Fe), and phosphorus (P); a mixture of a manganese (Mn)-containing compound and an iron (Fe) and phosphorus (P)-containing compound; and/or a (e.g., any suitable) mixture of a manganese (Mn)-containing compound, an iron (Fe)-containing compound, and a phosphorus (P)-containing compound. For example, the manganese iron phosphate precursor may include $Mn_xFe_{1-x}PO_4·H_2O$; a mixture of $MnCO_3$ and $FePO_4·H_2O$; and/or a (e.g., any suitable) mixture of $MnCO_3$, $FeSO_4$, and $H_3PO_4$. Here, x may be about 0.3 to about 0.7.

The lithium source may include at least one selected from among the group consisting of lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

The carbon source may include at least one selected from among the group consisting of glucose, sucrose, fructose, cellulose, starch, citric acid, polyacrylic acid, polyethylene glycol, and dopamine.

The titanium source may include a titanium metal-containing oxide and/or a titanium metal-containing chloride. For example, the titanium source may be titanium oxide.

Wet grinding may be performed on the mixture (S200). For the wet grinding, a general wet mill capable of temperature control may be used. In particular, at least one selected from among a beads mill, a ball mill, an attrition mill, an apex mill, a super mill, and a basket mill may be used for the wet grinding. Through the wet grinding process, particles in the mixture may be ground to a fine size.

According to one or more embodiments of the present disclosure, the wet grinding (S200) may also not be provided. In one or more embodiments, in order to maximize or increase the average particle diameter of the first particle PTC1 to be finally prepared, the wet grinding (S200) of precursor particles may also not be provided.

The solvent may be removed from the mixture to form a dried mixture. According to one or more embodiments of the present disclosure, the forming of the dried mixture may include performing spray drying of the mixture (S300). A generally used spray-drying device may be used for the spray drying. For example, the spray drying may be performed by using at least one selected from among an ultrasonic spray-drying device, an air nozzle spray-drying device, an ultrasonic nozzle spray-drying device, a filter expansion droplet-generating device, and an electrostatic spray-drying device.

The particles, finely reduced to a size of a primary particle after the wet-grinding process, may be aggregated (e.g., agglomerated) with each other through the spray-drying process to thereby form a secondary particle. Therefore, by adjusting the flow rate and velocity of carrier gas, temperature, the residence time in a reactor, internal pressure, and/or the like during the spray drying process, the first particle PTC1 may be formed into the secondary particle of a desired or suitable size.

In one or more embodiments, the mixture to be spray-dried may have a total solid content (e.g., amount) (TSC) of about 20% to about 40% based on total of 100% of the mixture. The total solid content (e.g., amount) may refer to a converted value to percentage of the weight of a solid material remaining after solvent evaporation (that is, dried mixture) with respect to the total weight of the mixture (that is, spray liquid). For example, the spray liquid may have a total solid content (e.g., amount) of about 30 wt% based on total of 100 wt% of the spray liquid.

When the total solid content (e.g., amount) is less than about 20% based on a total of 100% of the spray liquid, disadvantages may include a decrease in an average particle diameter of the first particle PTC1 and a reduction in productivity. When the total solid content (e.g., amount) is greater than about 40% based on a total of 100% of the spray liquid, adjusting the average particle diameter of the first particle PTC1 may become more difficult, and size difference between the first particles PTC1 may increase.

The spray liquid according to one or more embodiments may have a viscosity of about 1500 mPa·s to about 2500 mPa·s with the above-mentioned total solid content (e.g., amount). For example, the spray liquid may have a viscosity of about 2000 mPa·s. The viscosity can be measured at 25°C using, for example, a Brookfield DV2T Viscometer (AMETEK Brookfield), Brookfield DVNext Rheometer (AMETEK Brookfield), Anton Paar MCR Series Rheometers (e.g., MCR 102, MCR 302), TA Instruments Discovery HR Series Rheometers (e.g., HR-10, HR-20), or Malvern Kinexus Rheometer (e.g., Kinexus Ultra+, Kinexus Pro+).

In one or more embodiments, the spray drying may be performed at a temperature of about 100 °C to about 300 °C. Spray gas (for example, air), used for the spray drying, may be injected at a first temperature, and discharged at a second temperature. For example, the first temperature may be about 200 °C to about 250 °C. The second temperature may be about 80 °C to about 150 °C.

The spray liquid for the spray drying may have a flow rate of about 30 mL/min to about 80 mL/min. When the flow rate is less than about 30 mL/min, disadvantages of nozzle clogging, reduced productivity, and/or the like may be caused. When the flow rate is greater than about 80 mL/min, due to moisture condensation in the spray-drying device, the mixture may not be dried completely.

The spray liquid may have an input pressure of about 0.3 MPa to about 0.7 MPa. For example, the input pressure of the spray liquid may be about 0.5 MPa.

The dried mixture may be calcined in an inert atmosphere (S400). The inert atmosphere may be a nitrogen atmosphere and/or an argon atmosphere. The temperature at which the calcination process is performed may be about 500 °C to about 1000 °C, or about 600 °C to about 800 °C. The execution time of the calcination process may be about 4 hours to about 20 hours, or about 6 hours to about 12 hours. As the dried mixture is calcined, the first particle PTC1 containing the compound represented by Formula 1, previously described, may be formed.

Dry grinding may be performed on the calcined first particle PTC1 (S500). The calcined mixture may be ground using an air jet mill, and/or the like. The dry grinding may be performed at a rotation speed of about 5000 rpm to about 7000 rpm. When the dry grinding is performed at a rotation speed within the above-described range, the first particle PTC1 may have a form of a secondary particle. The dry grinding of the first particle PTC1 may also not be provided.

In the preparation of the first particle PTC1, according to one or more embodiments of the present disclosure, the carbon source may be introduced to the manganese iron phosphate precursor to form a carbon coating layer uniformly (e.g., substantially uniformly) on surfaces of first primary particles NNP1. Thereafter, the first primary particles NNP1 may be closely aggregated (e.g., agglomerated) through the spray drying to form a dense sphere-shaped secondary particle.

As a result, the first particle PTC1 may include the stable carbon coating layer in the outside and inside of the first particle PTC1, and may thus have a relatively high carbon content (e.g., amount). Due to the high carbon content (e.g., amount) of the first particle PTC1, a positive electrode active material layer AML1 may have improved conductivity.

Preparation of a second particle PTC2 according to one or more embodiments of the present disclosure will be described in more detail.

An iron phosphate precursor, a lithium source, a carbon source, and a titanium source may be added to a solvent and mixed (S100). For example, the solvent may be water, ethanol, and/or the like. The iron phosphate precursor may be a compound containing both (e.g., simultaneously) iron (Fe) and phosphorus (P), and/or a (e.g., any suitable) mixture of an iron (Fe)-containing compound and a phosphorus (P)-containing compound. For example, the iron phosphate precursor may include $FePO_4 \cdot H_2O$, and/or a (e.g., any suitable) mixture of $FeSO_4$ and $H_3PO_4$.

The lithium source, the carbon source, and the titanium source may be substantially the same as or similar to those in the preparation of the first particle PTC1 previously described.

Wet grinding (S200) may be performed on the mixture. The wet grinding process may be performed in substantially the same as or similar manner to that in the preparation of the first particle PTC1 previously described.

According to one or more embodiments of the present disclosure, the wet grinding (S200) may also not be provided. In one or more embodiments, in order to maximize or increase the average particle diameter of the second particle PTC2 to be finally prepared, the wet grinding (S200) of precursor particles may also not be provided.

The solvent may be removed from the mixture to form a dried mixture. According to one or more embodiments of the present disclosure, the forming of the dried mixture may include performing spray drying on the mixture (S300). A spray-drying device may be substantially the same as or similar to the spray-drying device previously described for the first particle PTC1.

The particles, finely reduced to a size of a primary particle after the wet-grinding process, may be aggregated (e.g., agglomerated) with each other through the spray-drying process to thereby form a secondary particle. Therefore, by adjusting the flow rate and velocity of carrier gas, temperature, the residence time in a reactor, internal pressure, and/or the like during the spray drying process, the second particle PTC2 may be formed into the secondary particle of a desired or suitable size.

In one or more embodiments, the mixture to be spray-dried may have a total solid content (e.g., amount) (TSC) of about 20% to about 40% based on a total of 100% of the spray liquid. The total solid content (e.g., amount) may refer to a converted value to percentage of the weight of a solid material remaining after solvent evaporation (that is, dried mixture) with respect to the total weight of the mixture (that is, spray liquid). For example, the spray liquid may have a total solid content (e.g., amount) of about 30 wt% based on a total of 100 wt% of the spray liquid.

When the total solid content (e.g., amount) is less than about 20% based on a total of 100% of the spray liquid, disadvantages may include a decrease in an average particle diameter of the second particle PTC2 and a reduction in productivity. When the total solid content (e.g., amount) is greater than about 40%, adjusting the average particle diameter of the second particle PTC2 may become more difficult, and a size difference between the second particles PTC2 may increase.

The spray liquid according to this embodiment may have a viscosity of about 1500 mPa·s to about 2500 mPa·s with the above-mentioned total solid content (e.g., amount). For example, the spray liquid may have a viscosity of about 2000 mPa·s.

In one or more embodiments, the spray drying may be performed at a temperature of about 100 °C to about 300 °C. Spray gas (for example, air), used for the spray drying, may be injected at a first temperature, and discharged at a second temperature. For example, the first temperature may be about 200 °C to about 250 °C. The second temperature may be about 80 °C to about 150 °C.

The spray liquid for the spray drying may have a flow rate of about 30 mL/min to about 80 mL/min. When the flow rate is less than about 30 mL/min, disadvantages of nozzle clogging, reduced productivity, and/or the like may be caused. When the flow rate is greater than about 80 mL/min, due to moisture condensation in the spray-drying device, the mixture may not be dried completely.

The spray liquid may have an input pressure of about 0.3 MPa to about 0.7 MPa. For example, the input pressure of the spray liquid may be about 0.5 MPa.

The dried mixture may be calcined in an inert atmosphere (S400). The calcination process may be performed in substantially the same as or similar manner to that in the preparation of the first particle PTC1 previously described.

Dry grinding may be performed on the calcined second particle PTC2 (S500). The calcined mixture may be ground using an air jet mill, and/or the like. The dry grinding may be performed at a rotation speed of about 0 rpm to about 7000 rpm. When the dry grinding is performed at a rotation speed within the above-described range, the second particle PTC2 may have a form of a secondary particle. The dry grinding of the second particle PTC2 may also not be provided.

In the preparation of the second particle PTC2, according to one or more embodiments of the present disclosure, the carbon source may be introduced to the iron phosphate precursor to form a carbon coating layer uniformly (e.g., substantially uniformly) on surfaces of second primary particles NNP2. Thereafter, the second primary particles NNP2 may be closely aggregated (e.g., agglomerated) through the spray drying to form a dense sphere-shaped secondary particle. As a result, the second particle PTC2 may include the stable carbon coating layer in the outside and inside of the second particle PTC2, and may thus have a relatively high carbon content (e.g., amount). Due to the high carbon content (e.g., amount) of the second particle PTC2, a positive electrode active material layer AML2 may have improved conductivity.

By mixing the prepared first particle PTC1 and second particle PTC2 in an appropriate or suitable ratio, the positive electrode active material according to one or more embodiments of the present disclosure may be formed.

Analysis on a carbon element according to one or more embodiments of the present disclosure may be performed using an Elementar Micro Cube elemental analyzer. The specific operation method and conditions are as follows. A sample of 1 to 2 mg is weighed in a tin cup, placed in an automatic sampling tray and introduced into a combustion tube through a ball valve, and the combustion is carried out at a combustion temperature of about 1000 °C. Subsequently, reduction of the combustion gas using reduced copper is carried out to form carbon dioxide. Carbon dioxide was detected using a thermal conductivity detector (TCD).

Scanning electron microscope-energy dispersive X-ray spectroscopy (SEM-EDS) and quantitative analyses on a particle surface were conducted to measure the carbon content (e.g., amount) according to one or more embodiments of the present disclosure. In addition to SEM-EDS, inductively coupled plasma-mass spectrometry (ICP-MS), inductively coupled plasma optical emission spectroscopy (ICP-OES), and/or the like may be used to measure the carbon content (e.g., amount).

Hereinafter, examples and comparative examples of the present disclosure are described in more detail. However, the following examples are provided for illustrative purposes only and are not to be construed to limit the scope of the present disclosure.

**Comparative Example 1: Preparation of First Particle in Form of Single Particle**

A manganese iron phosphate precursor ($Mn_{0.6}Fe_{0.4}PO_4$), lithium carbonate, and titanium dioxide were mixed in a molar ratio of (Mn+Fe):Li:Ti=about 1:1.03:0.004. 10 wt% of glucose was added to the mixture. Wet grinding was performed on the mixture by ball milling. The mixture was dried over evaporation on a tray by heating, and then dried in a vacuum oven at about 85 °C for about 4 hours. The dried mixture was calcined in a nitrogen atmosphere at about 650 °C for about 10 hours. The calcined product was ground at a rotation speed of about 8000 rpm to obtain a first particle in the form of a single particle. The average particle diameter of the first particle was about 100 nm to about 200 nm. The doping amount of Ti was about 2000 ppm.

**Comparative Example 2: Preparation of Second Particle in Form of Single Particle**

An iron phosphate precursor ($Fe_1PO_4$), lithium carbonate, and titanium dioxide were mixed in a molar ratio of Fe:Li:Ti=about 1:1.03:0.002. The second particle was prepared in substantially the same manner as that of Comparative Example 1 except that 10 wt% of glucose was added to the mixture. The average particle diameter of the second particle was about 200 nm to about 300 nm. The doping amount of Ti was about 1000 ppm.

In other words, Comparative Example 1 describes the preparation of a single particle by mixing an iron phosphate precursor ($Mn_{0.6}Fe_{0.4}PO_4$), lithium carbonate, and titanium dioxide in a molar ratio of 1:1.03:0.004, with 10 wt% glucose added. The mixture was wet ground via ball milling, dried through evaporation and in a vacuum oven at 85°C for 4 hours, and then calcined in a nitrogen atmosphere at 650°C for 10 hours. The resulting product was ground to achieve a particle diameter of 100-200 nm, with a Ti doping amount of 2000 ppm. Comparative Example 2 follows a similar process using $Fe_1PO_4$, resulting in a particle diameter of 200-300 nm and a Ti doping amount of 1000 ppm.

**Example 1: Preparation of First Particle in Form of Secondary Particle**

A manganese iron phosphate precursor ($Mn_{0.6}Fe_{0.4}PO_4$), lithium carbonate, and titanium dioxide were mixed in a molar ratio of (Mn+Fe):Li:Ti=about 1:1.03:0.004. 12 wt% of glucose was added to the mixture. The slurry mixture was dried over evaporation, through spray drying, under conditions of a spray pressure of about 0.5 MPa and a temperature of about 230 °C. The dried mixture was calcined in a nitrogen atmosphere at about 750 °C and for about 10 hours to obtain a first particle in the form of a secondary particle. A first average particle diameter of the first particle was about 50 nm to about 200 nm. The doping amount of Ti was about 2000 ppm.

**Example 2: Preparation of Second Particle in Form of Secondary Particle**

An iron phosphate precursor ($Fe_1PO_4$), lithium carbonate, and titanium dioxide were mixed in a molar ratio of Fe:Li:Ti=about 1:1.03:0.002. The second particle was prepared in substantially the same manner as that of Example 1 except that 10 wt% of glucose was added to the mixture. A second average particle diameter of the second particle was about 200 nm to about 300 nm. The doping amount of Ti was about 1000 ppm.

In other words, Example 1 details the preparation of a secondary particle using a similar precursor mixture as Comparative Example 1 ($Mn_{0.6}Fe_{0.4}PO_4$, lithium carbonate, and titanium dioxide) with 12 wt% glucose. The slurry was dried via spray drying at 0.5 MPa and 230°C, then calcined at 750°C for 10 hours, producing a particle with a diameter of 50-200 nm and 2000 ppm Ti. Example 2 uses $Fe_1PO_4$ and follows a similar method as Example 1, resulting in a secondary particle with a diameter of 200-300 nm and 1000 ppm Ti.

### Comparative Example 3-1: Mixture Preparation of First Particle and Second Particle

The first particle according to Example 1 and the second particle according to Example 2 were mixed in a mass ratio of about 30:70 to prepare a positive electrode active material.

### Comparative Example 3-2: Mixture Preparation of First Particle and Second Particle

The first particle according to Example 1 and the second particle according to Example 2 were mixed in a mass ratio of about 40:60 to prepare a positive electrode active material.

### Example 3-3: Mixture Preparation of First Particle and Second Particle

The first particle according to Example 1 and the second particle according to Example 2 were mixed in a mass ratio of about 50:50 to prepare a positive electrode active material.

### Example 3-4: Mixture Preparation of First Particle and Second Particle

The first particle according to Example 1 and the second particle according to Example 2 were mixed in a mass ratio of about 60:40 to prepare a positive electrode active material.

### Preparation of Positive Electrode

95 wt% of a final positive electrode active material, 3 wt% of a polyvinylidene fluoride binder, and 2 wt% of a carbon black conductive material were mixed in an N-methylpyrrolidone solvent to prepare a positive electrode active material slurry. The positive electrode active material slurry was applied to an aluminum current collector and dried, and then rolling was performed to prepare a positive electrode.

### Manufacture of Rechargeable Lithium Battery

The prepared positive electrode and a lithium metal counter electrode, as a counter electrode, were used to prepare a 2032-type (kind) coin half-cell. A separator (thickness: about 16 μm) formed of a porous polyethylene (PE) film was interposed between the positive electrode and the lithium metal counter electrode, and an electrolyte solution was introduced to manufacture a rechargeable lithium battery. The electrolyte solution obtained by mixing $LiPF_6$ of 1.3 M in a mixed solvent containing ethylene carbonate (EC), ethylmethyl carbonate (EMC), and dimethyl carbonate (DMC) in a volume ratio of about 3:4:3 was used as an electrolyte.

### Evaluation Example 1: Surface Analysis of Positive Electrode Active Material

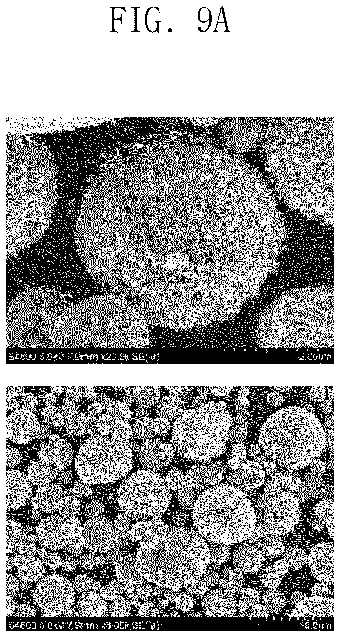

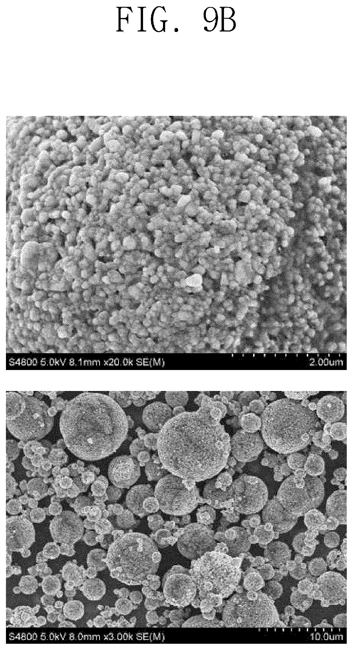

FIG. 9A shows a scanning electron microscope (SEM) image of the positive electrode active material prepared according to Example 1. FIG. 9B shows a SEM image of the positive electrode active material prepared according to Example 2. Referring to FIG 9A, it can be seen that the first particle according to the example of the present disclosure has the form of a sphere-shaped secondary particle in which a plurality of first primary particles are aggregated (e.g., agglomerated). Referring to FIG 9B, it can be seen that the second particle according to the example of the present disclosure has the form of a sphere-shaped secondary particle in which a plurality of second primary particles are aggregated (e.g., agglomerated).

### Evaluation Example 2: Evaluation on Active Material I

The pellet densities (PD) and carbon contents of the positive electrode active materials according to Comparative Examples 1 to 2 and Examples 1 to 2 were measured, and the results were listed in Table 1.

Table 1

| Classification | Mixing ratio | | Powder | | |
|---|---|---|---|---|---|
| | Single particle | Secondary particle | Pellet density (g/cc) | Amount of C (wt%) | Size of primary particle (nm) |
| Comparative Example 1 | 100% | 0% | 2.35 | 1.51 | 100 to 200 |
| Comparative Example 2 | 100% | 0% | 2.39 | 1.58 | 200 to 400 |
| Example 1 | 0% | 100% | 2.41 | 1.84 | 50 to 200 |
| Example 2 | 0% | 100% | 2.45 | 1.81 | 200 to 300 |

Referring to Table 1, it can be seen that the positive electrode active material according to Example 1 of the present disclosure has more excellent or suitable pellet density and carbon content (e.g., amount) than the positive electrode active material according to Comparative Example 1. It can be seen that the positive electrode active material according to Example 1 of the present disclosure has a smaller primary particle than that of the positive electrode active material according to Comparative Example 1. In addition, it can be seen that the positive electrode active material according to Example 2 of the present disclosure has more excellent or suitable pellet density and carbon content (e.g., amount) than the positive electrode active material according to Comparative Example 2. It can be seen that the positive electrode active material according to Example 2 of the present disclosure has a smaller primary particle than that of the positive electrode active material according to Comparative Example 2. In other words, Table 1 shows that the positive electrode active material in Example 1 has better pellet density and carbon content compared to Comparative Example 1, and it also has smaller primary particles. Similarly, the positive electrode active material in Example 2 exhibits superior pellet density and carbon content compared to Comparative Example 2, along with smaller primary particles.

For example, it can be seen that, if (e.g., when) the first particle and the second particle are both (e.g., simultaneously) secondary particles, the pellet density and carbon content (e.g., amount) are higher, and the primary particle is smaller than if (e.g., when) the first particle and the second particle are single particles. That is, if (e.g., when) the first particle and the second particle are both secondary particles, the pellet density and carbon content are improved.

**Evaluation Example 3: Evaluation on Active Material II**

The pellet densities (PD) and carbon contents of the positive electrode active materials according to Examples 1, 2, and 3-3 to 3-4, and Comparative Examples 3-1 and 3-2 were measured, and the results were listed in Table 2.

Table 2

| Classification | Mixing ratio | | Powder | |
|---|---|---|---|---|
| | Example 1 | Example 2 | Pellet density (g/cc) | Amount of C (wt%) |
| Example 1 | 100% | 0% | 2.41 | 1.84 |
| Example 2 | 0% | 100% | 2.45 | 1.81 |
| Comparative Example 3-1 | 30% | 70% | 2.44 | 1.82 |
| Comparative Example 3-2 | 40% | 60% | 2.43 | 1.82 |
| Example 3-3 | 50% | 50% | 2.43 | 1.83 |
| Example 3-4 | 60% | 40% | 2.43 | 1.83 |

Referring to Table 2, it can be seen that the positive electrode active materials according to Examples 3-3 and 3-4 of the present disclosure have similar pellet densities to that of the positive electrode active material according to Example 1. It can be seen that the positive electrode active materials according to Examples 3-3 to 3-4 of the present disclosure have similar carbon contents to that of the positive electrode active material according to Example 1. In sum, it can be seen that the positive electrode active materials according to Examples 3-3 to 3-4 of the present disclosure have pellet densities and carbon contents both (e.g., simultaneously) similar to those of the positive electrode active material according to Example 1.

**Evaluation Example 3: Evaluation on Battery Characteristics**

Characteristics of rechargeable lithium batteries prepared using the positive electrode active materials according to Comparative Examples 1 to 2 and Examples 1, 2, 3-3, and 3-4, and Comparative Examples 3-1 and 3-2 were evaluated.

For initial charging and discharging, the rechargeable lithium battery was initially charged under conditions of a constant current (0.2 C) and a constant voltage (4.45 V), was rested for about 10 minutes and then discharged with a constant current (0.2 C) until a voltage reached 2.5 V. Thereafter, the charging and discharging cycle was repeated 50 times at about 25 °C under about 1.0 C/1.0 C conditions. In addition, a coin cell was additionally manufactured to measure the capacity with about 0.2 C at about -20 °C.

The results of evaluating the battery characteristics were listed in Table 3.

Table 3

| Classification | Mixing ratio | | Coin cell | | | | | |
|---|---|---|---|---|---|---|---|---|
| | Example 1 | Example 2 | Charge amount at 4.45V (mAh/g) | Discharge amount at 4.45V (mAh/g) | Efficiency at 4.45V (%) | Capacity at -20 °C (mAh/g) | Average voltage (V) | Lifespan at 50 cycles (%) |
| Comparative Example 1 | - | - | 146.1 | 136.2 | 93.2 | 96 | 3.60 | 99.1 |
| Comparative Example 2 | - | - | 164.1 | 159.7 | 97.3 | 57 | 3.20 | 98.5 |
| Example 1 | 100% | 0% | 149.2 | 139.4 | 93.4 | 126 | 3.60 | 99.8 |
| Example 2 | 0% | 100% | 165.2 | 163.4 | 98.9 | 97 | 3.20 | 99.0 |
| Comparative Example 3-1 | 30% | 70% | 160.2 | 156.0 | 97.4 | 103.0 | 3.32 | 99.1 |
| Comparative Example 3-2 | 40% | 60% | 158.8 | 153.8 | 96.9 | 111.0 | 3.36 | 99.3 |
| Example 3-3 | 50% | 50% | 156.8 | 150.8 | 96.2 | 119.5 | 3.40 | 99.6 |
| Example 3-4 | 60% | 40% | 155.0 | 148.7 | 95.9 | 125.2 | 3.44 | 99.8 |

Referring to Table 3, it can be seen that the rechargeable batteries according to Examples 3-3 and 3-4 of the present disclosure have similar capacities at about -20 °C, average voltages, and lifespans to those of the rechargeable battery according to Example 1.

A person of ordinary skill in the art would appreciate, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

In the context of the present application and unless otherwise defined, the terms "use," "using," and "used" may be considered synonymous with the terms "utilize," "utilizing," and "utilized," respectively.

Further, the use of "may" when describing embodiments of the inventive concept refers to "one or more embodiments of the inventive concept." Also, the term "exemplary" is intended to refer to an example or illustration.

As used herein, the singular forms "a", "an" and "the" are intended to include the plural forms as well, unless the context clearly indicates otherwise. I

A battery manufacturing device, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A positive electrode active material according to one or more embodiments of the present disclosure includes a first particle which is a secondary particle, and a second particle which is a secondary particle. Accordingly, the positive electrode active material may have improved battery characteristics in low-temperature capacity, average voltage, energy density, and lifespan, and also have high binding force for a current collector.

A rechargeable lithium battery according to one or more embodiments of the present disclosure may have improved battery characteristics in low-temperature capacity, average voltage, energy density, and lifespan, and also have high binding force for a current collector.

Although one or more embodiments of the present disclosure have been described with reference to the accompanying drawings, it is understood that the present disclosure should not be limited to these embodiments but one or more suitable changes and modifications can be made within the scope of the claims (and equivalents thereof), the detailed description of the present disclosure, and the accompanying drawings, and this also falls within the scope of the present disclosure.

Embodiments are set out in the following clauses:

Clause 1. A preparation method comprising:

preparing a first particle having a first average particle diameter;
preparing a second particle having a second average particle diameter; and
mixing the first particle and the second particle such that an amount of the first particle is equal to or greater than an amount of the second particle,
wherein the preparing of the first particle comprises
mixing a manganese iron phosphate precursor, a first lithium source, a first carbon source, and a first titanium source to form a first mixture,
drying the first mixture through spray drying, and
calcining the dried first mixture, and
wherein, the preparing of the second particle comprises:

mixing an iron phosphate precursor, a second lithium source, a second carbon source, and a second titanium source to form a second mixture,
drying the second mixture through spray drying, and
calcining the dried second mixture,
wherein the preparation method is a preparation method of a positive electrode active material.

Clause 2. The preparation method of clause 1, wherein a mixing ratio of the first particle and the second particle is about 50:50 to about 99:1.

Clause 3. The preparation method of clause 1 or clause 2, wherein an amount of Ti in the first particle is greater than an amount of Ti in the second particle.

Clause 4. The preparation method of any one of clauses 1 to 3, wherein the spray drying comprises

forming a first secondary particle by aggregation of particles in the first mixture, and
forming a second secondary particle by aggregation of particles in the second mixture.

Clause 5. The preparation method of any one of clauses 1 to 4, wherein each of the first mixture and the second mixture, utilized as a spray liquid for the spray drying, has a total solid content of about 20 wt% to about 40 wt% based on a total 100 wt% of the spray liquid, and has a viscosity of about 1500 mPa·s to about 2500 mPa·s.

**Claims**

1. A positive electrode active material comprising:

   a first particle comprising a compound represented by Formula 1, and having a first average particle diameter; and
   a second particle comprising a compound represented by Formula 2, and having a second average particle diameter larger than the first average particle diameter,
   wherein each of the first particle and the second particle has a form of a secondary particle, and
   an amount of the first particle is equal to or greater than an amount of the second particle:

   $$\text{Formula 1} \qquad \text{Li}_{a1}\text{Mn}_{w1}\text{Fe}_{x1}\text{Ti}_{y1}\text{B1}_{z1}\text{PO}_{4\text{-}b1},$$

   wherein, in Formula 1, $0.8 \leq a1 \leq 1.2$, $0.3 \leq w1 \leq 0.7$, $0.3 \leq x1 \leq 0.7$, $0 \leq y1 \leq 0.05$, $0 \leq z1 \leq 0.05$, $0 \leq b1 \leq 0.05$, and $x1 + y1 + z1 + w1 = 1$,

   $$\text{Formula 2} \qquad \text{Li}_{a2}\text{Fe}_{x2}\text{Ti}_{y2}\text{B2}_{z2}\text{PO}_{4\text{-}b2},$$

   wherein, in Formula 2, $0.8 \leq a2 \leq 1.2$, $0.900 \leq x2 \leq 0.999$, $0.001 \leq y2 \leq 0.05$, $0 \leq z2 \leq 0.05$, $0 \leq b2 \leq 0.05$, and $x2 + y2 + z2 = 1$, and
   wherein each of B1 in Formula 1 and B2 in Formula 2 is at least one element selected from the group consisting of transition metals having an oxidation number of 4.

2. The positive electrode active material as claimed in claim 1, wherein a mixing ratio of the first particle and the second particle is about 50:50 to about 99:1.

3. The positive electrode active material as claimed in claim 1 or claim 2,

   wherein the first particle comprises a plurality of first primary particles aggregated with each other,
   the second particle comprises a plurality of second primary particles aggregated with each other, and
   each of the plurality of first primary particles has a size smaller than a size of each of the plurality of second primary particles.

4. The positive electrode active material as claimed in claim 3, wherein the size of each of the plurality of first primary particles is about 50 nm to about 200 nm.

5. The positive electrode active material as claimed in claim 3 or claim 4, wherein the size of each of the plurality of second primary particles is about 200 nm to about 300 nm.

6. The positive electrode active material as claimed in any one of claims 1 to 5, wherein an amount of Ti in the first particle is greater than an amount of Ti in the second particle.

7. The positive electrode active material as claimed in claim 6,

   wherein the amount of Ti in the first particle is about 1000 ppm to about 3000 ppm, and
   the amount of Ti in the second particle is about 1000 ppm to about 3000 ppm.

8. The positive electrode active material as claimed in any one of claims 1 to 7, wherein a mixing ratio of the first particle and the second particle is determined such that an amount of Mn with respect to metal elements other than lithium in the positive electrode active material is about 25 at% to about 70 at%.

9. The positive electrode active material as claimed in claim 1,

   wherein the first average particle diameter of the first particle is about 1 $\mu$m to about 7 $\mu$m, and
   the second average particle diameter of the second particle is about 3 $\mu$m to about 10 $\mu$m.

10. The positive electrode active material as claimed in any one of claims 1 to 9,

   wherein each of the first particle and the second particle comprises a first coating layer containing carbon,
   an amount of carbon in the first particle is about 1.5 wt% to about 2.0 wt% based on a total of 100 wt% of the first particle, and
   an amount of carbon in the second particle is about 1.0 wt% to about 1.9 wt% based on a total of 100 wt% of the second particle.

11. The positive electrode active material as claimed in any one of claims 1 to 10, wherein a span value, obtained by analysis on the first particle utilizing a particle size analyzer, is about 0.3 to about 0.75.

12. The positive electrode active material as claimed in any one of claims 1 to 11, wherein a span value, obtained by analysis on the second particle utilizing a particle size analyzer, is about 0.3 to about 0.75.

13. The positive electrode active material as claimed in any one of claims 1 to 12, wherein the first particle has a porosity of about 15% to about 40%.

14. The positive electrode active material as claimed in any one of claims 1 to 13, wherein the second particle has a porosity of about 15% to about 30%.

15. A rechargeable lithium battery comprising the positive electrode active material as claimed in any one of claims 1 to 14.

# FIG. 1

# FIG. 2

FIG. 3

# FIG. 4

# FIG. 5

# FIG. 6

# FIG. 7

```
                    ┌──────────┐
                    │  Start   │
                    └──────────┘
                          │
                          ▼
        ┌──────────────────────────────────┐
        │  Mix precursor, lithium source,  │───S100
        │  carbon source, and dopant source│
        └──────────────────────────────────┘
                          │
                          ▼
        ┌──────────────────────────────────┐
        │           Wet grind              │───S200
        └──────────────────────────────────┘
                          │
                          ▼
        ┌──────────────────────────────────┐
        │              Dry                 │───S300
        └──────────────────────────────────┘
                          │
                          ▼
        ┌──────────────────────────────────┐
        │            Calcine               │───S400
        └──────────────────────────────────┘
                          │
                          ▼
        ┌──────────────────────────────────┐
        │           Dry grind              │───S500
        └──────────────────────────────────┘
                          │
                          ▼
                    ┌──────────┐
                    │   End    │
                    └──────────┘
```

FIG. 8

FIG. 9A

# FIG. 9B

**Europäisches Patentamt**
**European Patent Office**
**Office européen des brevets**

# EUROPEAN SEARCH REPORT

**Application Number**

EP 25 16 9095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 882 015 B1 (LG CHEMICAL LTD [KR]) 3 October 2018 (2018-10-03) * paragraphs [0022], [0023], [0124]; example 1; table 1 * | 1-15 | INV. H01M4/36 C01B25/45 H01M4/40 H01M4/485 |
| A | CN 116 692 812 A (QUJING DYNANONIC NANO TECH CO LTD; FOSHAN DYNANONIC TECH CO LTD ET AL.) 5 September 2023 (2023-09-05) * example A1 * | 1-15 | H01M4/505 H01M4/525 H01M4/58 H01M4/62 H01M10/0525 |
| A | US 2023/108289 A1 (BIE CHANGFENG [CN] ET AL) 6 April 2023 (2023-04-06) * table 1 * | 1-15 | H01M4/136 |

**TECHNICAL FIELDS SEARCHED (IPC)**

H01M
C01B

The present search report has been drawn up for all claims

| Place of search | Date of completion of the search | Examiner |
|---|---|---|
| The Hague | 11 August 2025 | Jones, Alexandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 9095

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2025

| Patent document cited in search report | | Publication date | Patent family member(s) | | Publication date |
|---|---|---|---|---|---|
| EP 2882015 | B1 | 03-10-2018 | CN | 104584283 A | 29-04-2015 |
| | | | EP | 2882015 A1 | 10-06-2015 |
| | | | JP | 6078650 B2 | 08-02-2017 |
| | | | JP | 2015536026 A | 17-12-2015 |
| | | | KR | 20150026863 A | 11-03-2015 |
| | | | TW | 201527207 A | 16-07-2015 |
| | | | US | 2015064557 A1 | 05-03-2015 |
| | | | US | 2018097226 A1 | 05-04-2018 |
| | | | WO | 2015030401 A1 | 05-03-2015 |
| CN 116692812 | A | 05-09-2023 | CN | 116692812 A | 05-09-2023 |
| | | | WO | 2024244309 A1 | 05-12-2024 |
| US 2023108289 | A1 | 06-04-2023 | CN | 116097468 A | 09-05-2023 |
| | | | CN | 120089713 A | 03-06-2025 |
| | | | CN | 120089714 A | 03-06-2025 |
| | | | CN | 120089715 A | 03-06-2025 |
| | | | CN | 120089716 A | 03-06-2025 |
| | | | EP | 4170755 A1 | 26-04-2023 |
| | | | US | 2023108289 A1 | 06-04-2023 |
| | | | WO | 2022047705 A1 | 10-03-2022 |

EPO FORM P0459

For more details about this annex : see Official Journal of the European Patent Office, No. 12/82